# NEUE EUROPÄISCHE PATENTSCHRIFT

(11) **EP 1 516 522 B2**
(45) Veröffentlichungstag und Bekanntmachung des Hinweises auf die Entscheidung über den Einspruch: **29.03.2023**
(45) Hinweis auf die Patenterteilung: 20.09.2017
(21) Anmeldenummer: 04019760.0
(22) Anmeldetag: 20.08.2004
(51) Int. Cl.: A01D 41/127, A01F 12/52

(54) **Verfahren und Vorrichtung zur Ermittlung der Überkehrerntegutmenge**
Method and device for determining the amount of tailings return
Dispositif et méthode pour la détermination de la quantité de résidues renvoyés

(30) Priorität: 19.09.2003 DE 10343916; 15.12.2003 DE 10358954
(43) Veröffentlichungstag der Anmeldung: 23.03.2005
(73) Patentinhaber: CLAAS Selbstfahrende Erntemaschinen GmbH, 33428 Harsewinkel (DE)
(72) Erfinder: Behnke, Willi, 33803 Steinhagen (DE); Baumgarten, Joachim, Dr., 48361 Beelen (DE)
(74) Vertreter: CLAAS Gruppe

(56) Entgegenhaltungen:
- EP-A- 0 463 240
- EP-A1- 1 038 429
- EP-A2- 0 967 495
- DE-A1- 2 445 045
- DE-A1- 19 618 042
- DE-C1- 4 341 834
- GB-A- 1 516 696
- US-A- 4 036 065
- US-A- 6 053 811
- US-A- 6 119 442
- US-A- 6 125 702
- US-A- 6 146 268
- US-A1- 2002 133 309

## Beschreibung

Die Erfindung betrifft ein Verfahren und eine Vorrichtung zur Ermittlung der Überkehrerntegutmenge nach den Oberbegriffen der Ansprüche 1 und 13.

Die GB-A-1 516 696 offenbart einen Mähdrescher mit einer Messvorrichtung zur Ermittlung eines durch die Überkehr geförderten Gutstromes. Die Messeinrichtung überwacht die Schichthöhe der Überkehr in einem Überkehrkanal innerhalb vorgegebener Grenzen Bei Überschreiten der Grenzen erhält der Bediener eine optische oder akustische Anzeige, um die Ursachen zu beseitigen oder es werden Maßnahmen direkt eingeleitet. Zur Ermittlung der losen Körner in der Überkehr ist dem Obersieb und dem Untersieb der Reinigungseinrichtung je ein als Mikrophon ausgebildetes Messelement zugeordnet.

Dem Messelement ist eine mit einer Alarmvorrichtung verbundene Anzeigeeinrichtung zugeordnet, die bei Überschreiten einer vorbestimmten Körnermenge pro Zeiteinheit aktiviert wird. Zusätzlich ist eine Messvorrichtung vorgesehen, die die in den Komtank geförderten Körner ermittelt. Der Anteil Körner in der Überkehr wird mit der in den Korntank geförderten Körnermenge verglichen, wobei das Ergebnis auf einer Anzeigevorrichtung dargestellt beziehungsweise einen Alarm auslöst. Aus der DE 199 12 372 C1 ist eine Vorrichtung zur Messung zumindest eines Teiles der Körner in einer Überkehr bekannt geworden. Auf dem Förderweg der von einer Reinigungseinrichtung abgeschiedenen Überkehrerntegutmenge zu einer weiteren Verarbeitungseinrichtung ist ein ausschließlich die Körner zählender Sensor angeordnet. In Förderrichtung der Überkehr gesehen, befindet sich vor dem Sensor eine Ährenschnecke in einem Gehäuse. Das Gehäuse ist in dem zum Sensor zeigenden Bereich mit anpassbaren Öffnungen ausgestattet, durch die die Körner hindurchtreten. Die von dem Sensor erzeugten Signale werden auf einer Anzeige in der Fahrerkabine dem Fahrer sichtbar gemacht.

Nachteilig bei dieser Ausführung ist, dass die Messwerte für die Körneranzahl als Absolutwerte dargestellt werden. Den dargestellten Messwerten fehlt der Bezug beispielsweise zur Durchsatzleistung oder anderen Gutmengenströmen in der Reinigungseinrichtung.

Für den Fahrer ist vorallem das Verhältnis der Körnermenge in der Überkehrerntegutmenge zur gesamten Überkehrerntegutmenge entscheidend, da dieses Verhältnis die Qualität der von der Reinigungseinrichtung erbrachten Leistung auf einfache Weise widerspiegelt.

Der Erfindung liegt daher die Aufgabe zugrunde ein Verfahren und eine Vorrichtung zur Ermittlung der Überkehrerntegutmenge derart weiterzuentwickeln, dass die Erntegutmenge in der Überkehr auf einfache Weise relativ genau ermittelt und aussagefähig anzeigt.

Diese Aufgabe wird erfindungsgemäß durch die in den Patentanprüchen 1 und 11 genannten Merkmale gelöst. Weitere vorteilhafte Ausführungen des Erfindungsgegenstandes ergeben sich aus den übrigen Ansprüchen.

Indem die Erntegutmenge der Überkehr durch die Generierung von Körnerstromsignalen und Gutstromsignalen dargestellt wird, kann die Zusammensetzung der Erntegutmenge angezeigt werden. Anhand der Zusammensetzung der Erntegutmenge kann der Fahrer die Wirkung der Reinigungseinrichtung beurteilen.

Vorteilhafterweise werden die Körnerstromsignale mit einer Körnerstrommesseinrichtung generiert, die wenigstens einen Impulsdichtesensor umfasst, so dass die im Erntegutstrom der Überkehr enthaltenen Körner detektiert werden, ohne die Körner zuvor von den Nichtkornbestandteilen trennen zu müssen.

Dadurch, dass der Impulsdichtesensor zur Messung der Anzahl Körner ein Stabsensor ist, wird der Erntegutstrom in dem Mähdrescher nicht gestört und die Impulsdichte erreicht ein zur weiteren Bearbeitung verwertbares Maß.

Indem die Stabsensoren im Austrittbereich der Erntegutmenge der Überkehr aus der Reinigungsvorrichtung angeordnet sind, wird sichergestellt, dass die Überkehrerntegutmenge ohne Behinderung im freien Fall auf die Stabsensoren auftrifft, wobei die Körner aufgrund des sogenannten Körperschalls ein verwertbares Signal in den Stabsensoren erzeugen.

Der Stabsensor ist mit einem Federgummielement am Auffang- und Führungsboden der Überkehreinrichtung befestigt, damit Schwingungen z. B. im Fahrbetrieb gedämpft auf den Stabsensor übertragen werden. Starke ungedämpfte Schwingungen können ansonsten den Stabsensor schwingungserregen, was dazu führt, dass Körnersignale ausgelöst werden ohne das Körner auf den Stabsensor auftreffen.

Das Gutstromsignal wird vorteilhafterweise von einer Volumenstrommesseinrichtung generiert, die einen Überkehrvolumenstrom in einem Ährenelevator misst, so dass die aus Körnern und Nichtkornbestandteilen zusammengesetzte Überkehrerntegutmenge kontinuierlich gemessen werden kann.

Damit neben dem Überkehrkornanteil und der Überkehrerntegutmenge auch die Kornverluste bestimmbar sind kann das erfindungsgemäße System zudem über eine Volumenstrommesseinrichtung verfügen, die ein die geerntete Gesamtkornmenge abbildendes Körnerstromsignal generiert.

Damit der Fahrer die Ergebnisse der Messung unverzüglich angezeigt bekommt, werden die Körnerstromsignale und das Gutstromsignal an eine Auswerte- und Anzeigeeinheit übermittelt. Die Auswerte- und Anzeigeeinheit ermittelt hieraus neben der Überkehrkornmenge und der Überkehrerntegutmenge auch eine Erntegutkornmenge, die die Menge des geernteten Korns repräsentiert.

Berechnet die Auswerte- und Anzeigeeinheit mit dem Körnerstromsignal , einer Tausendkornmasse der Fruchtart und einem Flächenäquivalent aus Sensorfläche und nutzbarer Abscheidefläche der Überkehreinrichtung eine Überkehrkornmasse, kann diese Kornmasse beispielsweise ins Verhältnis zur Masse der Überkehrerntegutmenge gesetzt werden. Der Wert des Massenverhältnisses wird als prozentualer Wert auf einer Anzeige angezeigt und dient der Beurteilung der Wirkung der Reinigungseinrichtung.

Auf vergleichbare Weise könnte die Auswerte- und Anzeigeeinheit mit dem Körnerstromsignal, der Tausendkornmasse der Fruchtart, dem Flächenäquivalent aus Sensorfläche und nutzbarer Abscheidefläche der Überkehreinrichtung und einer spezifischen Dichte ein Körnervolumen berechnen und ins Verhältnis zum Überkehrvolumenstrom setzen. Das Volumenverhältnis kann ebenfalls als prozentualer Wert auf einer Anzeige dargestellt werden und dient damit auch der Beurteilung der Wirkung der Reinigungseinrichtung.

In einer ersten Ausführungsvariante werden die Überkehrkornmenge und die Überkehrerntegutmenge zugleich auf getrennten Anzeigen auf einem Bildschirm der Auswerte- und Anzeigeeinheit quantitativ dargestellt. Der Fahrer sieht einerseits die Absolutwerte als auch das Verhältnis der Absolutwerte zueinander. Der Fahrer hat bei dieser Anzeige die Möglichkeit zu erkennen, wenn zum Beispiel die Gutströme in den Elevatoren maximal zulässige Volumenströme erreichen.

Eine qualitativ hochwertige Überkehrsignale generierende Überkehrsensiereinrichtung ergibt sich dann, wenn die Überkehrerntegutmenge zumindest teilweise in einer dem Mähdrescher zugeordneten Reinigungseinrichtung oder einem Teilbereich der Reinigungseinrichtung erfasst wird, da in diesem Bereich der Einfluss die Messwerte verfälschender Ereignisse noch gering ist.

Eine besonders hochwertige Signalermittlung ergibt sich dann, wenn in diesem Bereich der Reinigung der Kornanteil in der Überkehrerntegutmenge ermittelt wird, da die Körner beim Übergang von der Reinigungseinrichtung in die Überkehreinrichtung einen relativ großen Weg gegen die Wirkung der Schwerkraft zurücklegen müssen, sodass auf einfache Weise mittels erprobter Sensorsysteme die Zahl der Körner und damit der Kornanteil in der Überkehrerntegutmenge erfasst werden kann.

Eine konstruktiv besonders einfache Ausführung zur Ermittlung des Kornanteils in der Überkehrerntegutmenge ergibt sich dann, wenn zumindest eine Körnerstrommesseinrichtung im Bereich der Reinigungseinrichtung vorgesehen ist, welche mittels sogenannter Impulsdichtesensoren Körnerstromsignale generiert, die in einer Auswerte- und Anzeigeeinheit quantitativ den Kornanteil in der Überkehrerntegutmenge darstellt.

Weist die Reinigungseinrichtung mehrere Siebebenen auf, so kann in einer vorteilhaften Weiterbildung der Erfindung jeder Siebebene zumindest eine Körnerstrommesseinrichtung zugeordnet sein. Dies hat den Vorteil, dass individueller auf die Abscheidecharakteristiken der einzelnen Siebebenen reagiert werden kann indem unterschiedliche Einstellungen für die Siebe der verschiednen Siebebenen vorgesehen werden.

In vorteilhafter Weiterbildung der Erfindung werden die Körnerstromsignale der mehreren Körnerstrommesseinrichtungen in der Auswert- und Anzeigeeinheit zu siebebenenabhängigen Kornanteilen verrechnet und angezeigt, sodass der Betreiber genauere Informationen über die Abscheidecharakteristik der einzelnen Siebebenen erhält.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
Fig.1 einen schematischen Querschnitt durch einen Mähdrescher mit einer erfindungsgemäßen Messvorrichtung,
Fig.2 einen Bildschirm der Auswerte- und Anzeigeeinheit,
Fig.3 eine zweite Ausführung eines Bildschirms der Auswerte- und Anzeigeeinheit, die nicht zur Erfindung gehört.
Fig. 4 eine Einzelheit nach Fig. 1 mit erfindungsgemäßen Messvorrichtungen

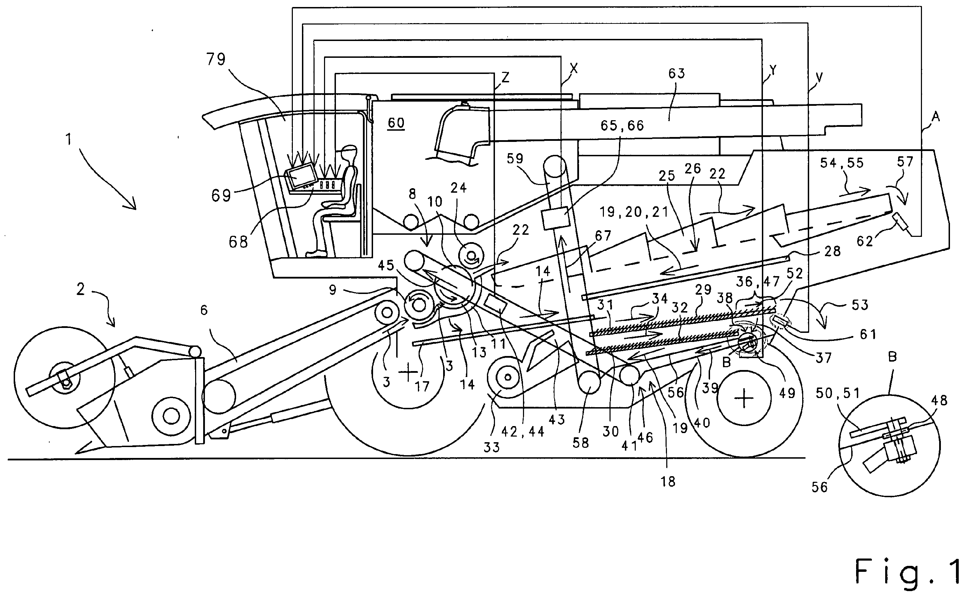

Bei dem in Figur 1 gezeigten Ausführungsbeispiel der Erfindung handelt es sich um einen selbstfahrenden Mähdrescher 1 mit einem sog. Tangentialdreschwerk 8 und einem nachgeordneten Hordenschüttler 25 als Abscheideeinrichtung. Unterhalb des Hordenschüttlers 25 befindet sich eine Reinigungseinrichtung 18, bestehend aus zwei stufig übereinander angeordneten Sieben 31, 32 und einem Gebläse 33. Die Erfindung ist aber ausdrücklich nicht auf derartige ausgeführte Mähdreschertypen beschränkt.

Die Arbeitsweise eines solchen Mähdreschers 1 wird nachfolgend beschrieben. Das Erntegut 3 wird zunächst von einem Schneidwerk 2 aufgenommen, das das Erntegut 3 einem Schrägförderer 6 zuführt. Der Schrägförderer 6 übergibt das Erntegut 3 in seinem rückwärtigen Bereich an die Dreschorgane 9, 10, 11.

Am Eingang des Dreschwerks 8 befindet sich eine Vorbeschleunigungstrommel 9, der in Gutflussrichtung eine Dreschtrommel 10 nachgeordnet ist. Untenseitig werden die Vorbeschleunigungstrommel 9 und die Dreschtrommel 10 wenigstens teilweise von einem Dreschkorb 11 ummantelt.

Das aus dem Schrägförderer 6 austretende Erntegut 3 wird durch die Vorbeschleunigertrommel 9 erfasst und weiter von der Dreschtrommel 10 durch den zwischen der Dreschtrommel 10 und dem Dreschkorb 11 ausgebildeten Dreschspalt 13 gezogen. Dabei bearbeitet die Dreschtrommel 10 das Erntegut mechanisch in dessen Folge ein Korn-Spreu-Gemisch 14 am Dreschkorb 11 abgeschieden und über einen Vorbereitungsboden 17 der Reinigungseinrichtung 18 zugeführt wird, um die Körner 19 von den Nichtkornbestandteilen, d. h. von Halm 20 - und Spreuteilen 21, zu trennen.

Vom Dreschwerk 8 gelangt der im Wesentlichen aus ausgedroschenen Halmen bestehende Gutstrom 22 dann über die entgegen dem Uhrzeigersinn rotierende Wendetrommel 24 auf den Hordenschüttler 25, der den Gutstrom 22 in den rückwärtigen Bereich des Mähdreschers 1 fördert. Dabei werden die noch im Gutstrom 22 befindlichen Körner 19 sowie eventuell Kurzstroh 20 und Spreu 21 abgetrennt, indem sie durch die mit Sieböffnungen 26 versehenen Hordenschüttler 25 hindurch auf einen Rücklaufboden 28 fallen. Der Rücklaufboden 28 transportiert Körner 19, Kurzstroh 20 und Spreu 21 zum Vorbereitungsboden 17.

Die Körner 19, das Kurzstroh 20 und die Spreu 21 gelangen schließlich ebenfalls über den Vorbereitungsboden 17 in die Reinigungseinrichtung 18, in welcher die Körner 19 vom Kurzstroh 20 und Spreu 21 getrennt werden. Dies erfolgt in der Weise, dass durch die Sieböffnungen 29, 30 im Obersieb 31 und im Untersieb 32 mittels des Gebläses 33 ein Luftsrom hindurchgefördert wird, welcher das über die Siebe 31, 32 in den hinteren Bereich des Mähdreschers 1 geführte Erntegut 34 auflockert und für das Heraustrennen der spezifisch leichteren Spreu- und Kurzstrohanteile 20, 21 sorgt, während die schweren Erntegutkörner 19 durch die Sieböffnungen 29, 30 fallen. Die Siebe 31, 32 sind teilweise übereinander angeordnet, so dass das Erntegut in zwei Stufen unterschiedlich fein gesiebt wird, wobei die Maschenweite der Siebe 31, 32 änderbar ist. Durch die Veränderung der Maschenweite und /oder der Drehzahl des Gebläses 33 lassen sich der Anteil und die Zusammensetzung der Erntegutmenge, die durch die Sieböffnungen 29, 30 hindurchtritt, der sogenannte Siebdurchgang 37 und der Anteil der über das Sieb 31, 32 transportiert wird, der sogenannte Siebüberlauf 38 beeinflussen. Zudem ist das Obersieb 31 in der Regel so ausgeführt, dass es in seinem rückwärtigen Bereich, dem sogenannten Überkehrbereich 36, größere Maschenweiten aufweist.

Ein Siebdurchgang 37, der im Überkehrbereich 36 durch das Obersieb 31 hindurchfällt und ein Siebüberlauf 38 am Ende des Untersiebs 32, enthält in der Regel schwerere Teilchen, d. h. unausgedroschene Ähren. Der Siebdurchgang 37 zusammen mit dem Siebüberlauf 38 wird nachfolgend als sogenannte Überkehrerntegutmenge 39 bezeichnet. Die Überkehrerntegutmenge 39 fällt auf einen schräg verlaufenden Auffangboden 40 unterhalb der Reinigungseinrichtung 18 und gleitet in eine Ährenförderschnecke 41. Die Ährenförderschnecke 41 fördert die Überkehrerntegutmenge 39 in einen Ährenelevator 43 , der sie erneut dem Dreschwerk 8 zuführt. Der Auffangboden 40, die Ährenförderschnecke 41 und der Ährenförderer 43 bilden zusammen eine Überkehreinrichtung 46. In dem Ährenelevator 43 ist eine an sich bekannte Volumenstrommesseinrichtung 42 angeordnet, die im wesentlichen aus einer Lichtschranke 44 besteht, die ein Gutstromsignal Z generiert, das sich in Abhängigkeit von dem geförderten Überkehrvolumenstrom 45 der Überkehrerntegutmenge 39 ändert und damit ein Maß für die Überkehrerntegutmenge 39 bildet.

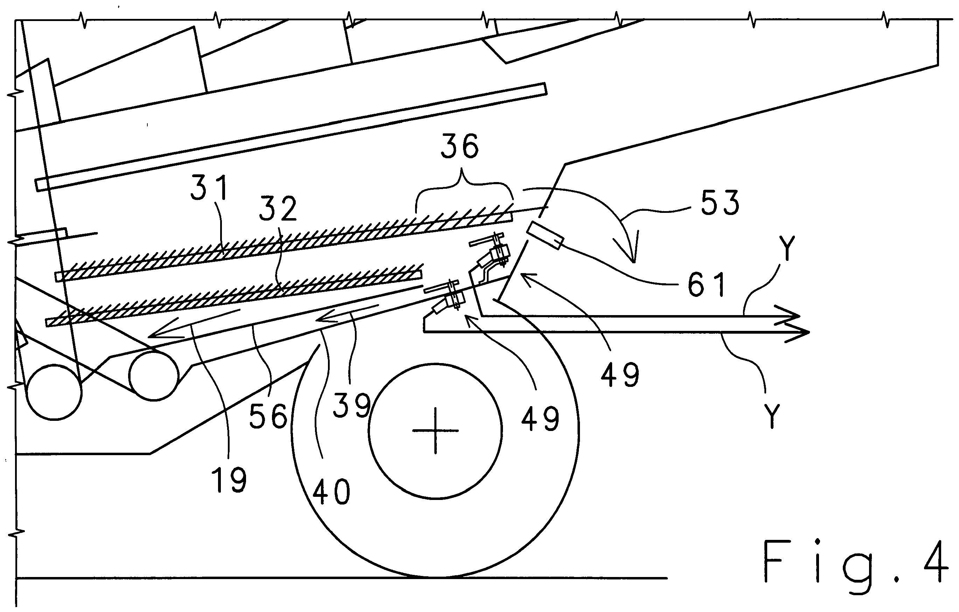

Um den Anteil der Körner 35 in der Überkehrerntegutmenge 39 zu bestimmen, ist am Ende des Untersiebes 32 im Austrittsbereich 47 der Überkehrerntegutmenge 39 aus der Reinigungseinrichtung 18 eine Körnerstrommesseinrichtung 49 angebracht, die mehrere Impulsdichtesensoren 50 umfasst (siehe vergrößert dargestellten Ausschnitt B). Bei den Impulsdichtesensoren 50 handelt es sich um an sich bekannte und deshalb nicht näher erläuterte Stabsensoren 51. Die Stabsensoren 51 erzeugen ein Körnerstromsignal Y, das sich proportional zur detektierten Körneranzahl 35 in der Überkehrerntegutmenge 39 ändert. Jeder Stabsensor 51 ist mit einem Federgummielement 48 am Auffangboden 56 der Überkehreinrichtung 46 befestigt. Zur Generierung sehr präziser Körnerstromsignale Y für den Überkehrerntegutstrom 39 kann jeder Siebebene 31, 32 gemäß Fig. 4 eine separate Körnerstrommesseinrichtung 49 zugeordnet sein, wobei die nunmehr generierten Körnerstromsignale Y ein Maß für den am Obersieb 31 abgeschiedenen Überkehrkornanteil und den insgesamt im Überkehrerntegutstrom 39 enthaltenen Überkehrkornanteil 35 bilden. Dies hat insbesondere den Vorteil, dass dem Betreiber des Mähdreschers 1 für Unter- und Obersieb 31, 32 getrennte Informationen verfügbar gemacht werden können, die es ihm ermöglichen noch präziser auf die Reinigungsverluste 53 in der Weise einzuwirken, dass Ober- und Untersieb 31, 32 unterschiedliche Einstellungen erfahren.

Aus Vereinfachungsgründen wird die weitere Beschreibung auf Fig. 1 bezogen, obgleich die zu beschreibenden Effekte auch auf die Anordnung mehrerer Kornstrommesseinrichtungen 49 nach Fig. 4 bezogen sind.

Der Siebüberlauf 52, der nicht durch das Obersieb 31 hindurch fällt, wird im hinteren Bereich des Mähdreschers 1 ausgeworfen, wobei die in diesem Siebüberlauf 52 enthaltenen Körner den Reinigungsverlust 53 bilden. Der Reinigungsverlust 53 wird in an sich bekannter Weise mit Klopfsensoren 61 detektiert. Das von den Klopfsensoren 61 erzeugte Reinigungsverlustsignal V ist im Wesentlichen proportional zu den Reinigungsverlusten 53.

Das Stroh 54 sowie ein bestimmter Prozentsatz an Verlustkörnern 55 wandern über den Hordenschüttler 25 zum hinteren Ende des Mähdreschers 1 und werden dort als Abscheideverlust 57 ausgeworfen. Auch der Abscheideverlust 57 wird in an sich bekannter Weise mit Klopfsensoren 62 detektiert. Das von den Klopfsensoren 62 erzeugte Abscheideverlustsignal A ist im Wesentlichen proportional zu den Abscheideverlusten 57. Die Körner 19, welche durch beide Siebe 31, 32 der Reinigungsvorrichtung 18 gelangt sind, fallen auf einen weiteren schräg verlaufenden Auffang- und Führungsboden 56 und gleiten in eine Kornförderschnecke 58, die die Körner 19 einem Kornelevator 59 zuführt. Sie werden dann von dem Kornelevator 59 in einen Korntank 60 des Mähdreschers 1 gefördert und können dort bei Bedarf mit einem Tankentleerförderer 63 auf einen Transportwagen umgeladen werden. In dem Kornelevator 59 ist eine an sich bekannte Volumenstrommesseinrichtung 65 angeordnet, die im Wesentlichen aus einer Lichtschrankenanordnung 66 besteht, die den geförderten Körnervolumenstrom 67 misst. Die wenigstens eine Lichtschrankenanordnung 66 erzeugt ein Gutstromsignal Z, dass sich proportional zum Körnervolumenstrom 67 ändert. Es liegt im Rahmen der Erfindung, dass zur Verbesserung der Gutstromsignale Z auch mehrere Lichtschranken 66 vorgesehen sein können.

Die Volumenstrommesseinrichtungen 42, 65 und die Körnerstrommesseinrichtungen 49 sowie die Klopfsensoren 61, 62 sind mit einer Auswerte- und Anzeigeeinheit 68 die vorzugsweise in der Fahrerkabine 79 angeordnet ist, verbunden. Die von den Lichtschranken 44, 66 erzeugten Gutstromsignale X, Z und die von den Stabsensoren 51 erzeugten Körnerstromsignale Y sowie die Abscheideverlustsignale A und die Reinigungsverlustsignale V werden an die Auswerte- und Anzeigeeinheit 68 übergeben. Die Auswerte- und Anzeigeeinheit 68 berechnet mit den Gutstromsignalen X, Z die insgesamt geerntete Kornmenge sowie die Überkehrerntegutmenge 39, mit dem Körnerstromsignal Y den Überkehrkornanteil 35 und mit den Abscheideverlustsignalen A und den Reinigungsverlustsignalen V die Reinigungsverluste 53 sowie die Abscheideverluste 57. Die von den Stabsensoren 51 ermittelte Körneranzahl wird von der Auswerte- und Anzeigeeinheit 68 in an sich bekannter Weise mit einem Flächenäquivalent aus Sensorfläche und nutzbarer Abscheidefläche in eine tatsächlich vorhandene Körneranzahl umgerechnet, wobei das Flächenäquivalent in der Auswerte- und Anzeigeeinheit 68 gespeichert ist.
Die Auswerte- und Anzeigeeinheit 68 kann weiterhin mit der berechneten Anzahl der Körner und der Tausendkornmasse der jeweiligen Fruchtart die entsprechende Körnermasse oder aber mit der spezifischen Dichte der Körner das Körnervolumen berechnen. Zusätzlich besteht die Möglichkeit, dass die Auswerte- und Anzeigeeinheit 68 Massen- und/oder Volumenverhältnisse zwischen Gutstrommengen bzw. Körnermengen berechnet. Die berechneten Werte werden auf einem Bildschirm 69 der Auswerte- und Anzeigeeinheit 68 angezeigt, wobei die Überkehrerntegutmenge 39 durch die Generierung von Körnerstromsignalen Y und Gutstromsignalen Z, X dargestellt wird.

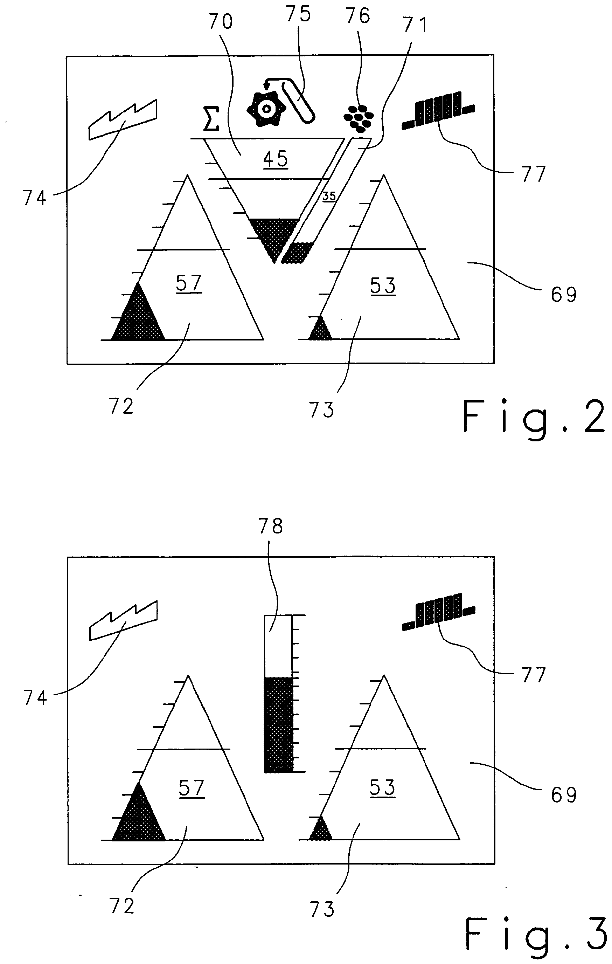

Fig.2 zeigt ein erstes Ausführungsbeispiel eines Bildschirms 69 der Auswerte- und Anzeigeeinheit 68.
Der Bildschirm 69 weist mehrere Anzeigen 70 - 73 auf, die dem Fahrer Informationen über Maschineneinstellungen und Betriebszustände des Mähdreschers 1 zur Verfügung stellen. In einer mittleren dreieckigen Graphikanzeige 70 ist der im Ährenelevator 43 momentan geförderte Überkehrvolumenstrom 45, welcher der Überkehrerntegutmenge 39 entspricht quantitativ dargestellt. Entlang des rechten Schenkels der dreieckigen Anzeige ist eine trapezförmige Graphikanzeige 71 angeordnet, die zugleich den in diesem Moment gemessene Überkehrkornanteil 35 in der Überkehrerntegutmenge 39 quantitativ dargestellt. Links und rechts daneben sind zwei weitere dreieckig gestaltete Graphikanzeigen 72, 73 angeordnet, wobei die linke Anzeige 72 den Abscheideverlust 57 und die rechte Anzeige 73 den Reinigungsverlust 53 wiedergibt. Zur Erkennung sind an den Anzeigen 70 - 73 Symbole 74 - 77 angeordnet, die die angezeigten Parameter versinnbildlichen.

Fig.3 zeigt ein zweites Ausführungsbeispiel eines Bildschirms 69 der Auswerte- und Anzeigeeinheit 68. Der Bildschirm 69 unterscheidet sich dadurch, dass zwischen den beiden äußeren Graphikanzeigen 72, 73 nur eine rechteckige Graphikanzeige 78 angeordnet ist. Die rechteckige Graphikanzeige 78 zeigt das momentane prozentuale Verhältnis zwischen der Masse der Überkehrkornmenge 35 zur Masse der Überkehrerntegutmenge 39 an. Das Verhältnis dieser beiden Massenströme ist ein Indikator für die Wirksamkeit der Reinigungseinrichtung 18 und dient als Ersatz für die optische, subjektive Erfassung der Überkehrerntegutmenge 39 vom Fahrer. Der Fahrer kann anhand der kombinierten Anzeigen 70 - 73, 78 sofort erkennen, wie sich beispielsweise eine Änderung der Drehzahl des Gebläses 33 der Reinigungseinrichtung 18 oder eine Verstellung der Maschenweite der Siebe 31, 32 auf die Reinigungswirkung der Reinigungseinrichtung 18 auswirkt. Bei der Änderung eines Parameters kann der Fahrer den Einfluss der Verstellung nachvollziehbar erkennen und die Wirkung der Reinigungseinrichtung 18 optimieren.

Es wird abschließend noch einmal darauf hingewiesen, dass es sich bei dem in den Figuren dargestellten Mähdrescher und der Messvorrichtung sowie dem im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. So kann beispielsweise der Massenstrom der Körner in der Überkehr ins Verhältnis zu anderen erfassten Massenströmen gesetzt werden und die ins Verhältnis gesetzten Massenströme auf einem Display angezeigt werden. Die dargestellten Verhältnisse dienen der Kontrolle der Wirksamkeit der Arbeitsorgane.

Die angezeigten Massen, Mengen und Volumen sind äquivalent zu den von den Sensoren in einem begrenzten Zeitintervall ermittelten Massen-, Mengen- und Volumenströmen.

**Bezugszeichenliste:**

| | | | |
|---|---|---|---|
| 1 | Mähdrescher | 43 | Ährenelevator |
| 2 | Schneidwerk | 44 | Lichtschranke |
| 3 | Erntegut | 45 | Überkehrvolumenstrom |
| 6 | Schrägförderer | 46 | Überkehreinrichtung |
| 8 | Dreschwerk | 47 | Austrittbereich |
| 9 | Vorbeschleunigertrommel | 48 | Federgummielement |
| 10 | Dreschtrommel | 49 | Körnerstrommesseinrichtung |
| 11 | Dreschkorb | 50 | Impulsdichtesensor |
| 13 | Dreschspalt | 51 | Stabsensor |
| 14 | Korn-Spreu-Gemisch | 52 | Siebüberlauf |
| 17 | Vorbereitungsboden | 53 | Reinigungsverlust |
| 18 | Reinigungseinrichtung | 54 | Stroh |
| 19 | Körner | 55 | Verlustkörner |
| 20 | Halmteile/ Kurzstroh | 56 | Auffang- u. Führungsboden |
| 21 | Spreuteile/ Spreu | 57 | Abscheideverlust |
| 22 | Gutstrom | 58 | Kornförderschnecke |
| 24 | Wendetrommel | 59 | Kornelevator |
| 25 | Hordenschüttler | 60 | Korntank |
| 26 | Sieböffnungen | 61 | Klopfsensoren |
| 28 | Rücklaufboden | 62 | Klopfsensoren |
| 29 | Sieböffnungen Obersieb | 63 | Korntankentleerrohr |
| 30 | Sieböffnungen Untersieb | 65 | Volumenstrommesseinrichtung |
| 31 | Obersieb | 66 | Lichtschrankenanordnung |
| 32 | Untersieb | 67 | Körnervolumenstrom |
| 33 | Gebläse | 68 | Auswerte- u. Anzeigeeinheit |
| 34 | Erntegut | 69 | Bildschirm |
| 35 | Überkehrkornanteil | 70 | Graphikanzeige |
| 36 | Überkehrbereich | 71 | Graphikanzeige |
| 37 | Siebdurchgang | 72 | Graphikanzeige |
| 38 | Siebüberlauf | 73 | Graphikanzeige |
| 39 | Überkehrerntegutmenge | 74 | Symbol |
| 40 | Auffangboden | 75 | Symbol |
| 41 | Ährenförderschnecke | 76 | Symbol |
| 42 | Volumenstrommesseinrichtung | 77 | Symbol |
| 78 | Graphikanzeige | | |
| 79 | Fahrerkabine | | |
| A | Abscheideverlustsignal | | |
| V | Reinigungsverlustsignal | | |
| X | Körnerstromsignal | | |
| Y | Körnerstromsignal | | |
| Z | Gutstromsignal | | |

## Patentansprüche

1. Verfahren zur Ermittlung einer Überkehrerntegutmenge (39) in einer Überkehreinrichtung (46) eines Mähdreschers (1) und wobei die Überkehrerntegutmenge (39) zumindest von Körnern (35) und Nichtkornbestandteilen gebildet wird,
**dadurch gekennzeichnet,**
**dass** die Überkehrerntegutmenge (39) durch die Generierung von Körnerstromsignalen (Y) und Gutstromsignalen (Z, X) dargestellt wird und die Überkehrerntegutmenge (39) und der Überkehrkornanteil (35) auf einem Bildschirm (69,70,71) quantitativ dargestellt werden.

2. Verfahren zur Ermittlung einer Überkehrerntegutmenge nach Anspruch 1,
**dadurch gekennzeichnet,**
**dass** die Körnerstromsignale (Y) mit einer Körnerstrommesseinrichtung (49) generiert werden, die wenigstens einen Impulsdichtesensor (50) umfasst.

3. Verfahren zur Ermittlung einer Überkehrerntegutmenge nach Anspruch 2,
**dadurch gekennzeichnet,**
**dass** der Impulsdichtesensor (50) zur Messung des Überkehrkornanteils (35) ein Stabsensor (51) ist.

4. Verfahren zur Ermittlung einer Überkehrerntegutmenge nach einem der vorangegangenen Ansprüche,
**dadurch gekennzeichnet,**
**dass** eine Vielzahl von Stabsensoren (51) im Austrittsbereich (47) der Überkehrerntegutmenge (39) aus einer Reinigungsvorrichtung (18) angeordnet sind.

5. Verfahren zur Ermittlung einer Überkehrerntegutmenge nach wenigstens einem der Ansprüche 3 bis 4,
**dadurch gekennzeichnet,**
**dass** der oder die Stabsensoren (51) an einem Auffang- und Führungsboden (56) der Überkehreinrichtung (46) mit einem Federgummielement (48) befestigt sind.

6. Verfahren zur Ermittlung einer Überkehrerntegutmenge nach einem der vorangegangenen Ansprüche,
**dadurch gekennzeichnet,**
**dass** das Gutstromsignal (Z) von einer Volumenstrommesseinrichtung (42) generiert wird, die den Volumenstrom der Überkehrerntegutmenge (39) in dem Ährenelevator (43) der Überkehreinrichtung (36) misst.

7. Verfahren zur Ermittlung einer Überkehrerntegutmenge nach wenigstens einem der vorangegangenen Ansprüche,
**dadurch gekennzeichnet,**
**dass** dem Körnerelevator (59) eine ein Gutstromsignal (X) generierende Volumenstrommesseinrichtung (65) zugeordnet ist.

8. Verfahren zur Ermittlung einer Überkehrerntegutmenge nach einem der vorangegangenen Ansprüche,
**dadurch gekennzeichnet,**
**dass** die Körnerstromsignale (Y) und das Gutstromsignal (Z, X) an eine Auswerte- und Anzeigeeinheit (68) übermittelt werden, wobei die Auswerte- und Anzeigeeinheit (68) aus dem wenigstens einen Körnerstromsignal (Y) des Überkehrbereiches (36) eine Überkehrkornmenge (k), aus dem in einem Körnerelevator (59) generierten Gutstromsignal (X) eine Erntegutkornmenge (k1) und aus dem Gutstromsignal (Z) eine Überkehrerntegutmenge (39) berechnet.

9. Verfahren zur Ermittlung einer Überkehrerntegutmenge nach Anspruch 8 ,
**dadurch gekennzeichnet,**
**dass** die Auswerte- und Anzeigeeinheit (68) aus dem Körnerstromsignal (Y), einer Tausendkornmasse der Fruchtart und einem Flächenäquivalent aus Sensorfläche und nutzbarer Abscheidefläche der Überkehreinrichtung (46) eine Überkehrkornmasse (35) berechnet.

10. Verfahren zur Ermittlung einer Überkehrerntegutmenge nach wenigstens einem der Ansprüche 8 bis 9,
**dadurch gekennzeichnet,**
**dass** die Auswerte- und Anzeigeeinheit (68) aus dem Körnerstromsignal (Y), der Tausendkornmasse der Fruchtart, dem Flächenäquivalent aus Sensorfläche und nutzbarer Abscheidefläche der Überkehreinrichtung (46) und einer spezifischen Dichte ein Überkehrkörnervolumen berechnet.

11. Vorrichtung zur Durchführung des Verfahrens nach Anspruch 1,
**dadurch gekennzeichnet,**
**dass** die Überkehrerntegutmenge (39) durch die Generierung von Körnerstromsignalen (X,Y) und Gutstromsignalen (Z) dargestellt wird und die Überkehrerntegutmange (39) und der Überkehrkornanteil (35) auf einem Bildschirm (69,70,71) quantitativ dargestellt werden und die Überkehrerntegutmenge (39) zumindest teilweise in einer dem Mähdrescher (1) zugeordneten Reinigungseinrichtung (18) oder einem Teilbereich der Reinigungseinrichtung (18) erfasst wird.

12. Vorrichtung nach Anspruch 11,
**dadurch gekennzeichnet,**
**dass** die in der Reinigungseinrichtung (18) oder einem Teilbereich der Reinigungseinrichtung (18) erfasste Überkehrerntegutmenge (39) die Ermittlung des Kornanteils (k1) der Überkehrerntegutmenge (39) umfasst.

13. Vorrichtung nach einem der Ansprüche 11 - 12,
**dadurch gekennzeichnet,**
**dass** der Kornanteil (k1) der Überkehrerntegutmenge (39) mittels zumindest einer Körnerstrommesseinrichtung (49) erfasst wird und wobei die Körnerstrommesseinrichtung (49) zumindest einen Körnerstromsignale (Y) generierenden Impulsdichtesensor (50) aufnimmt, der mit einer Auswerte- und Anzeigeeinheit (68) in Wirkverbindung steht, die eine qualitative und/oder quantitative Anzeige (71) des Kornanteils (k1) der Überkehrerntegutmenge (39) zulässt.

14. Vorrichtung nach einem der Ansprüche 11 - 13,
**dadurch gekennzeichnet,**
**dass** die Reinigungseinrichtung (18) zumindest aus ersten und zweiten Siebebenen (31, 32) besteht und jeder Siebebene (31, 32) zumindest eine Körnerstrommesseinrichtung (49) zugeordnet ist.

15. Vorrichtung nach Anspruch 14,
**dadurch gekennzeichnet,**
**dass** die mehreren Körnerstrommesseinrichtungen (49) Körnerstromsignale (Y) generieren, die in der Auswerte- und Anzeigeeinheit (68) zu siebebenenabhängigen Kornanteilen (k2) der Überkehrerntegutmenge (39) verrechnet und angezeigt werden.

16. Vorrichtung nach einem der Ansprüche 11 - 15,
**dadurch gekennzeichnet,**
**dass** die Auswert- und Anzeigeeinheit (68) verschiedenen Parameter des Erntegutstromes (3) anzeigt und dass diese Parameter, neben dem Überkehrkornanteil (k) und der Überkehrerntegutmenge (39) die Reinigungsverluste (53) und die Abscheideverluste (57) sein können.

## Claims

1. Method of determining a tailings crop material amount (39) in a tailings device (46) of a combine harvester (1) and wherein the tailings crop material amount (39) is formed at least by grains (35) and non-grain components,
**characterized in that**
the tailings crop material amount (39) is represented by the generation of grain flow signals (Y) and crop flow signals (Z, X) and the tailings crop material amount (39) and the tailings grain proportion (35) are quantitatively represented on a display screen (69, 70, 71).

2. Method of determining a tailings crop material amount according to claim 1,
**characterized in that**
the grain flow signals (Y) are generated with a grain flow measuring device (49) which includes at least one pulse density sensor (50).

3. Method of determining a tailings crop material amount according to claim 2,
**characterized in that**
the pulse density sensor (50) for measuring the tailings grain proportion (35) is a rod sensor (51).

4. Method of determining a tailings crop material amount according to one of the preceding claims,
**characterized in that**
a plurality of rod sensors (51) are arranged in the exit region (47) of the tailings crop material amount (39) from a cleaning device (18).

5. Method of determining a tailings crop material amount according to at least one of claims 3 to 4,
**characterized in that**
the rod sensor or sensors (51) are fixed on a catch and guide plate (56) of the tailings device (46) with a spring rubber element (48).

6. Method of determining a tailings crop material amount according to one of the preceding claims,
**characterized in that**
the crop flow signal (Z) is generated by a volume flow measuring device (42) which measures the volume flow of the tailings crop material amount (39) in the ear elevator (43) of the tailings device (36).

7. Method of determining a tailings crop material amount according to at least one of the preceding claims,
**characterized in that**
associated with the grain elevator (59) is a volume flow measuring device (65) which generates a crop flow signal (X).

8. Method of determining a tailings crop material amount according to one of the preceding claims,
**characterized in that**
the grain flow signals (Y) and the crop flow signal (Z, X) are transmitted to an evaluation and display unit (68), wherein the evaluation and display unit (68) calculates a tailings grain amount (k) from the at least one grain flow signal (Y) of the tailings region (36), a crop material grain amount (k1) from the crop flow signal (X) generated in a grain elevator (59) and a tailings crop material amount (39) from the crop flow signal (Z).

9. Method of determining a tailings crop material amount according to claim 8,
**characterized in that**
the evaluation and display unit (68) calculates a tailings grain mass (35) from the grain flow signal (Y), a thousand-grain mass of the crop type and an area equivalent comprising the sensor area and the usable separation area of the tailings device (46).

10. Method of determining a tailings crop material amount according to at least one of claims 8 to 9,
**characterized in that**
the evaluation and display unit (68) calculates a tailings grain volume from the grain flow signal (Y), the thousand-grain mass of the crop type, the area equivalent comprising the sensor area and the usable separation area of the tailings device (46) and a specific density.

11. Apparatus for carrying out the method according to claim 1,
**characterized in that**
the tailings crop material amount (39) is represented by the generation of grain flow signals (X, Y) and crop flow signals (Z) and the tailings crop material amount (39) and the tailings grain proportion (35) are quantitatively represented on a display screen (69, 70, 71) and the tailings crop material amount (39) is at least partially detected in a cleaning device (18) associated with the combine harvester (1) or in a portion of the cleaning device (18).

12. Apparatus according to claim 11,
**characterized in that**
the tailings crop material amount (39) detected in the cleaning device (18) or a portion of the cleaning device (18) includes the determination of the grain proportion (k1) of the tailings crop material amount (39).

13. Apparatus according to one of claims 11 - 12,
**characterized in that**
the grain proportion (k1) of the tailings crop material amount (39) is detected by means of at least one grain flow measuring device (49) and wherein the grain flow measuring device (49) accommodates at least one pulse density sensor (50) which generates grain flow signals (Y) and which is operatively connected to an evaluation and display unit (68) which permits qualitative and/or quantitative display (71) of the grain proportion (k1) of the tailings crop material amount (39).

14. Apparatus according to one of claims 11 - 13,
**characterized in that**
the cleaning device (18) comprises at least first and second sieve planes (31, 32) and at least one grain flow measuring device (49) is associated with each sieve plane (31, 32).

15. Apparatus according to claim 14,
**characterized in that**
the plurality of grain flow measuring devices (49) generate grain flow signals (Y) which in the evaluation and display unit (68) are processed to give sieve plane-dependent grain proportions (k2) of the tailings crop material amount (39) and displayed.

16. Apparatus according to one of claims 11 - 15,
**characterized in that**
the evaluation and display unit (68) displays various parameters of the crop material flow (3) and that these parameters, besides the tailings grain proportion (k) and the tailings crop material amount (39), can be the cleaning losses (53) and the separation losses (57).

## Revendications

1. Procédé pour déterminer une quantité de produit de récolte en ôtons (39) dans un équipement de retour à ôtons (46) d'une moissonneuse-batteuse (1), et la quantité de produit de récolte en ôtons (39) étant formée au moins par des grains (35) et des composants non-grains,
**caractérisé en ce que**
la quantité de produit de récolte en ôtons (39) est représentée par la génération de signaux de flux de grains (Y) et de signaux de flux de produit (Z, X), et la quantité de produit de récolte en ôtons (39) et la proportion de grains en ôtons (35) sont représentées quantitativement sur un écran (69, 70, 71).

2. Procédé pour déterminer une quantité de produit de récolte en ôtons selon la revendication 1,
**caractérisé en ce que**
les signaux de flux de grains (Y) sont générés avec un équipement de mesure de flux de grains (49) qui comprend au moins un capteur de densité à impulsions (50).

3. Procédé pour déterminer une quantité de produit de récolte en ôtons selon la revendication 2,
**caractérisé en ce que**
le capteur de densité à impulsions (50) destiné à mesurer la proportion de grains en ôtons (35) est un capteur baguette (51).

4. Procédé pour déterminer une quantité de produit de récolte en ôtons selon une des revendications précédentes,
**caractérisé en ce qu'**
une pluralité de capteurs baguettes (51) sont disposés dans la zone de sortie (47) de la quantité de produit de récolte en ôtons (39) hors du dispositif de nettoyage (18).

5. Procédé pour déterminer une quantité de produit de récolte en ôtons selon au moins une des revendications 3 à 4,
**caractérisé en ce que**
le ou les capteurs baguettes (51) sont fixés à une table de collecte et de guidage (56) de l'équipement de retour à ôtons (46) avec un élément en caoutchouc élastique (48).

6. Procédé pour déterminer une quantité de produit de récolte en ôtons selon une des revendications précédentes,
**caractérisé en ce que**
le signal de flux de produit (Z) est généré par l'équipement de mesure de flux volumique (42), lequel mesure le flux volumique de la quantité de produit de récolte en ôtons (39) dans l'élévateur d'épis (43) de l'équipement de retour à ôtons (36) .

7. Procédé pour déterminer une quantité de produit de récolte en ôtons selon au moins une des revendications précédentes,
**caractérisé en ce qu'**
à l'élévateur de grains (59) est associé un équipement de mesure de flux volumique (65) générant un signal de flux de produit (X).

8. Procédé pour déterminer une quantité de produit de récolte en ôtons selon une des revendications précédentes,
**caractérisé en ce que**
les signaux de flux de grains (Y) et le signal de flux de produit (Z, X) sont transmis à une unité d'analyse et d'affichage (68), l'unité d'analyse et d'affichage (68) calculant, à partir du au moins un signal de flux de grains (Y) de la zone de retour d'ôtons (36), une quantité de grains en ôtons (k), à partir du signal de flux de produit (X) généré dans un élévateur de grains (59), une quantité de grains de produit de récolte (k1) et, à partir du signal de flux de produit (Z), une quantité de produit de récolte en ôtons (39).

9. Procédé pour déterminer une quantité de produit de récolte en ôtons selon la revendication 8,
**caractérisé en ce que**
l'unité d'analyse et d'affichage (68) calcule une masse de grains en ôtons (35) à partir du signal de flux de grains (Y), d'une masse de mille grains du type de récolte et d'un équivalent surfacique obtenu à partir de la surface de capteur et de la surface de séparation utile de l'équipement de retour à ôtons (46).

10. Procédé pour déterminer une quantité de produit de récolte en ôtons selon au moins une des revendications 8 à 9,
**caractérisé en ce que**
l'unité d'analyse et d'affichage (68) calcule un volume de grains en ôtons à partir du signal de flux de grains (Y), de la masse de mille grains du type de récolte, de l'équivalent surfacique obtenu à partir de la surface de capteur et de la surface de séparation utile de l'équipement de retour à ôtons (46), et d'une densité spécifique.

11. Dispositif pour réaliser le procédé selon la revendication 1,
**caractérisé en ce que**
la quantité de produit de récolte en ôtons (39) est représentée par la génération de signaux de flux de grains (X, Y) et de signaux de flux de produit (Z), et la quantité de produit de récolte en ôtons (39) et la proportion de grains en ôtons (35) sont représentées quantitativement sur un écran (69, 70, 71), et la quantité de produit de récolte en ôtons (39) est détectée au moins partiellement dans un équipement de nettoyage (18) associé à la moissonneuse-batteuse (1) ou dans une zone partielle de l'équipement de nettoyage (18).

12. Dispositif selon la revendication 11,
**caractérisé en ce que**
la quantité de produit de récolte en ôtons (39) détectée dans l'équipement de nettoyage (18) ou dans une zone partielle de l'équipement de nettoyage (18) comprend la détermination de la proportion de grains (k1) de la quantité de produit de récolte en ôtons (39).

13. Dispositif selon une des revendications 11-12,
**caractérisé en ce**
**que** la proportion de grains (k1) de la quantité de produit de récolte en ôtons (39) est détectée au moyen d'au moins un équipement de mesure de flux de grains (49), et l'équipement de mesure de flux de grains (49) comporte au moins un capteur de densité à impulsions (50) qui génère des signaux de flux de grains (Y) et qui est en liaison active avec une unité d'analyse et d'affichage (68), laquelle permet un affichage qualitatif et/ou quantitatif (71) de la proportion de grains (k1) de la quantité de produit de récolte en ôtons (39).

14. Dispositif selon une des revendications 11 à 13,
**caractérisé en ce que**
l'équipement de nettoyage (18) est constitué au moins de premiers et de deuxièmes plans de tamisage (31, 32), et à chaque plan de tamisage (31, 32) est associé au moins un équipement de mesure de flux de grains (49).

15. Dispositif selon la revendication 14,
**caractérisé en ce que**
les plusieurs équipements de mesure de flux de grains (49) génèrent des signaux de flux de grains (Y) qui, dans l'unité d'analyse et d'affichage (68), sont convertis en proportions de grains par plans de tamisage (k2) de la quantité de produit de récolte en ôtons (39) et affichés.

16. Dispositif selon une des revendications 11-15,
**caractérisé en ce que**
l'unité d'analyse et d'affichage (68) affiche divers paramètres du flux de récolte (3), et **en ce que**, en dehors de la proportion de grains en ôtons (k) et de la quantité de produit de récolte en ôtons (39), ces paramètres peuvent être les pertes de nettoyage (53) et les pertes de séparation (57).
